# DEMANDE DE BREVET EUROPEEN

(11) **EP 0 851 264 A1**
(43) Date de publication de la demande: **01.07.1998**
(21) Numéro de dépôt: 97420231.9
(22) Date de dépôt: 10.12.1997
(51) Int. Cl.: G02C 5/22

(54) **Charnière élastique**

(30) Priorité: 20.12.1996 FR 9616077
(71) Demandeur: ELO.PM S.A., 39400 Morez (FR)
(72) Inventeur: Morel, Michel, 39400 Morbier (FR)
(74) Mandataire: Moinas, Michel

(57) **Abrégé**

La charnière élastique est du type comprenant comme organe élastique de rappel (7) une tige déformable. Cet organe élastique de rappel (7) est fixé sur l'intérieur de la branche (3), puis traverse le tenon (2) à travers une lumière (9) ménagée à cet effet dans celui-ci pour se terminer par une extrémité libre renflée (8). L'organe de rappel (7) est libre de glisser dans la lumière (9) pour, quand la branche (3) est écartée au-delà de son ouverture normale, venir prendre appui sur l'extérieur du tenon (2) par son extrémité libre renflée (8), se déformer par élasticité de forme et, au relâchement de la branche (3), solliciter celle-ci en retour vers sa position d'ouverture normale. La tige est dirigée vers l'avant.

A l'inverse, la charnière peut, tout en étant du même type que ci-dessus, avoir sa tige de rappel fixée sur le tenon et traverser la branche. La tige est alors dirigée vers l'arrière.

## Description

La présente invention se rapporte à une charnière élastique d'un type comprenant comme organe élastique de rappel une lame ou tige déformable.

On connaît l'intérêt des charnières dites élastiques qui permettent à l'utilisateur d'une paire de lunettes d'ouvrir les deux branches de la monture au-delà de leur "position d'ouverture normale", c'est-à-dire au-delà d'une position sensiblement perpendiculaire à la façade de la monture et aux verres. Cette ouverture élastique au-delà de la position d'ouverture normale est typiquement de l'ordre de quelques dizaines de degrés et le retour à la position d'ouverture normale des branches se fait de lui-même lorsque l'utilisateur cesse de solliciter les branches vers l'extérieur.

L'intérêt de ces charnières élastiques est qu'elles permettent pour l'usager un grand confort d'utilisation en autorisant un enfilage aisé des lunettes et un appui avec souplesse derrière les oreilles, évitant de gêner l'utilisateur ou à la longue de le blesser si les branches, trop convergentes, appuient sur ces zones avec trop de force. Même si les branches sont trop convergentes en effet, les branches n'appuieront qu'avec modération du fait du jeu élastique vers l'extérieur.

Il existe divers types de charnières élastiques, de simples à compliquées, les plus élaborées étant généralement celles dans lesquelles la force de rappel élastique est générée par la sollicitation d'un ressort en compression ou en extension logé à l'intérieur de la branche dans une pièce rapportée contre ou sensiblement parallèlement à celle-ci. Ce n'est pas l'objet de l'invention, qui concerne un autre type de charnière, celle dans laquelle le rappel élastique est provoqué par une lame ou tige sollicitée en déformation élastique.

De telles structures sont connues et ont déjà été décrites, par exemple dans FR 2 703 477, qui concerne en réalité une charnière à came avec prépositionnement des positions "fermée" et "ouverte", et possibilité d'ouverture au-delà ; ou dans US 3 923 384 dont les deux formes d'exécution exposées travaillent en compression d'une lame sur une butée créée par un décrochement spécialement usiné dans le tenon.

On connaît l'inconvénient des sollicitations en compression sur une pièce rigide (sur une lame, ou pire sur une tige), qui ne permettent pas une grande amplitude, en l'occurrence une ouverture de la branche au-delà de sa position normale, autre que symbolique. On sait aussi et surtout la fragilité des pièces travaillant de la sorte qui, la fatigue de la matière aidant, se mettent à fluer, se déforment plastiquement et ne fonctionnent donc plus élastiquement, ou finissent carrément par se briser.

C'est pourquoi, on s'est orienté plus récemment vers des solutions techniques où l'organe élastique est sollicité en extension. On a ainsi décrit des charnières à lame ou à tige, par exemple dans FR 2 727 770 et FR 2 733 603, d'une relative simplicité et d'une grande élégance, mais qui présentent l'inconvénient de mobiliser des pièces qui doivent être usinées avec précision et qui sont donc relativement onéreuses à fabriquer. Dans toutes ces structures, on observera que le point de fixation de la lame ou de la tige, ainsi que son point d'appui lors de la sollicitation élastique, sont situés du même côté de la branche.

Le concept qui a présidé à la solution retenue selon l'invention fait aussi appel à la déformation par élasticité de forme d'un organe ad-hoc en forme de lame ou de tige, mais s'affranchit des complications et contraintes évoquées ci-dessus. Il conduit à une charnière élastique élégante, et d'une simplicité plus grande encore, les précisions d'usinage étant moins critiques. La charnière selon l'invention fait appel à un principe unique qui est d'avoir le point de fixation de l'organe élastique situé à l'intérieur de la branche, tandis que le point d'appui de celle-ci, lorsque la branche sera sollicitée au-delà de sa position d'écartement normal, est placé de l'autre côté, c'est-à-dire à l'extérieur, et non axialement comme dans US 3 923 384. En d'autres termes, l'organe élastique est traversant, il va être sollicité en élongation et il a une forme telle qu'ainsi sollicité, il va générer une force de rappel par élasticité de forme.

Dans une première forme d'exécution, l'organe élastique de rappel qui est une lame ou une tige déformable est fixé à l'intérieur de la branche, puis traverse le tenon à travers une lumière ménagée dans celui-ci pour se terminer par une extrémité libre renflée, l'organe de rappel étant libre de glisser dans la lumière pour, quand la branche est écartée au-delà de son ouverture normale, venir prendre appui sur l'extérieur du tenon par son extrémité libre renflée, se déformer par élasticité de forme en étant sollicité en élongation pour, au relâchement de la branche, renvoyer celle-ci vers sa position d'ouverture normale.

Dans une deuxième forme d'exécution, l'organe élastique de rappel qui est une lame ou une tige déformable est fixé sur l'intérieur du tenon, puis traverse la branche à travers une lumière ménagée à cet effet dans celle-ci, pour se terminer par une extrémité libre renflée, l'organe de rappel étant libre de glisser dans la lumière pour, quand la branche est écartée de l'axe en ouverture normale, venir prendre appui sur l'extérieur de la branche par son extrémité libre renflée, se déformer par l'élasticité de forme en étant sollicité en élongation pour, au relâchement de la branche, renvoyer celle-ci vers sa position d'ouverture normale.

La lame ou la tige, dans le diamètre où l'épaisseur doit être évidemment inférieure au diamètre de la lumière pour pouvoir la traverser, peut être d'un seul tenant avec sa partie renflée, le renflement étant obtenu dans la matière sous forme d'une boule, bille, goutte, d'un bulbe, d'une tête de clou, etc., de préférence de forme sensiblement sphérique, oblongue ou ovoïde. Il suffit qu'une seule dimension de la partie renflée, celle qui n'est pas dans l'axe de la lumière, soit supérieure à la largeur de celle-ci. En variante, la partie renflée peut être une pièce rapportée sous forme d'un embout serti ou soudé à demeure.

Si la lumière présente une de ses deux extrémités élargie, par exemple sous forme d'un cercle de diamètre plus grand que la largeur de la lumière, cela va permettre de monter la lame ou tige de rappel après l'avoir fixée sur la branche, respectivement le tenon, en faisant passer la partie renflée à travers la partie élargie de la lumière. Il faudra cependant veiller à ce que, à l'usage, la partie renflée ne puisse même accidentellement venir à nouveau en regard de la partie élargie de la lumière.

Si, solution plus sûre, la lumière est partout d'une épaisseur ou diamètre plus petit que la partie renflée, alors il faudra monter la lame ou la tige à travers la lumière avant de la fixer sur la branche, respectivement le tenon.

Dans une variante préférée, la partie renflée se présente sous la forme d'un embout amovible, ce qui facilite le montage et permet d'avoir une lame ou tige que l'on peut dégager de la lumière pour réparation éventuelle. Avantageusement, l'embout est ovoïde, oblong, ou présente deux méplats de façon à pouvoir passer à travers la lumière et ne plus pouvoir passer à travers celle-ci lorsqu'on l'a fait tourner, par exemple de 90°, et inversement permettant le dégagement de la tige ou de la lame s'il est ramené dans sa position initiale. Un tel embout peut être fixé par vissage ou sertissage.

En ce qui concerne l'autre extrémité de la lame ou tige, celle qui est fixée à la branche respectivement au tenon, on peut prévoir divers mécanismes de fixation, par exemple par soudage, sertissage ou vissage. On peut également prévoir que le point de fixation peut être déplacé, de façon à régler la force élastique de rappel, en fixant la lame ou tige sur la branche, respectivement le tenon, par l'intermédiaire d'une glissière.

Bien entendu, mais cela tombe sous le sens, la longueur de la lame ou de la tige doit être légèrement supérieure au chemin géométrique le plus court entre le point de fixation et le point d'arrêt ou d'appui dans la lumière pour que la déformation de forme puisse avoir lieu.

Avantageusement, la lame ou la tige élastique de rappel a une forme arquée, courbée ou bombée sur toute sa longueur, ou une forme d'abord droite puis arquée, courbée ou bombée. Son écartement par rapport à la charnière, c'est-à-dire le "ventre" qu'elle forme, est dans la position d'ouverture normale, compris de préférence entre 0,8 et 2 mm.

La nature du matériau utilisé pour la lame ou la tige importe peu pour autant qu'il puisse, de par sa forme, se déformer élastiquement, et non plastiquement, lorsqu'il est sollicité en élongation. Il n'est en particulier pas nécessaire que la tige ou la lame soit faite en un matériau intrinsèquement élastique, même si cela est bien entendu possible. On peut utiliser ainsi un métal tel que l'acier, l'aluminium, le titane et leurs alliages, ou certains plastiques tels que des élastomères. Le métal ou l'alliage peut être un métal ou un alliage classique ou, quoique cela ne soit pas indispensable, un alliage à mémoire de forme.

Bien entendu, l'organe élastique de rappel peut équiper une articulation ordinaire ou simple qui permet un positionnement stable de la branche en toute position entre la position ouverte ou la position fermée, ou une articulation dite à indexation, qui ne permet l'ouverture intermédiaire qu'en position instable maintenue par frottement, une force de rappel tendant à renvoyer la branche soit en position fermée, soit en position d'ouverture normale. De telles charnières à indexation sont bien connues et relèvent par exemple de mécanismes à came, ou autres, comme déjà signalé ci-dessus.

L'invention sera mieux décrite en référence aux dessins annexés, donnés à titre d'exemples non limitatifs. Pour la simplicité de l'exposé, seule est illustrée la solution dans laquelle l'organe de rappel élastique, en l'occurrence une tige, est solidaire de la branche et passe à travers une lumière réalisée dans le tenon, la tige étant dirigée vers l'avant où se trouve la partie renflée.

Il faut bien comprendre cependant que l'invention concerne également la solution inverse. C'est alors sur le tenon qu'est fixée la tige, la lumière à travers laquelle passe la tige étant placée sur la branche. En ce cas, la tige est dirigée vers l'arrière où se trouve la partie renflée.

Dans ces dessins :
- la figure 1 représente en vue en perspective de trois quart avant une monture de lunettes dans sa partie intéressant l'invention, la branche étant en position entrouverte seulement,
- la figure 2 est une vue correspondant à celle de la figure 1, dans laquelle la branche est dans sa position d'ouverture normale, et
- la figure 3 est une vue analogue aux deux vues précédentes, dans laquelle la branche a été écartée au-delà de sa position d'ouverture normale.

Sur les figures mentionnées ci-dessus, est représentée une partie de monture, dans la portion où réside l'invention, c'est-à-dire au niveau de l'articulation et de la charnière. Cette monture se compose d'un cercle 1 retenant un verre et d'un tenon 2 qui prolonge le cercle. A l'autre extrémité, on trouve une branche 3 qui est fixée au tenon au moyen d'une articulation 4 dans laquelle on place un axe 5 sous forme d'une vis ou d'une goupille sertie. Un élément ou organe élastique 7, ici sous forme de tige, est fixé à la branche par un organe de fixation 6. Par sa forme arquée, courbée ou bombée, la tige rejoint le tenon 2 qu'elle traverse par l'intermédiaire d'une lumière 9 ménagée à cet effet. L'organe élastique 7 se termine par un renflement en forme de goutte ou de bulbe ou de tête de clou qu'on désignera par la suite par l'expression "boule arrêt" 8, dont la forme est sensiblement celle de la lumière 9, mais dont les dimensions sont très légèrement inférieures de façon à pouvoir passer à travers cette lumière 9. Ici, boule arrêt et lumière ont grossièrement en plan le profil d'un oeuf.

La boule arrêt 8 peut être solidaire, par exemple d'un seul tenant, avec la partie tige proprement dite de l'organe élastique 7, ou solidarisée à celle-ci sous forme d'embout par n'importe quel moyen, notamment par soudage, vissage ou clipsage. Elle va prendre par exemple la position illustrée sur les figures où elle est grossièrement perpendiculaire à l'axe de la lumière, c'est-à-dire qu'elle ne peut plus passer à travers celle-ci et va pouvoir servir de point d'appui, en tant qu'arrêt-butoir.

En variante, la boule arrêt 8 fixée à la partie tige proprement dite de l'organe élastique 7 est un embout qui peut pivoter autour de celle-ci de façon à pouvoir, sans faire pivoter la tige, prendre également une position de blocage contre la lumière 9.

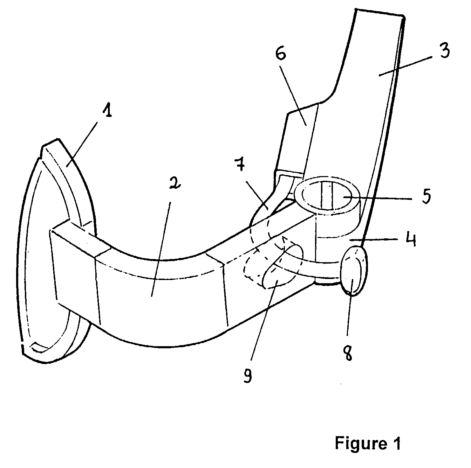

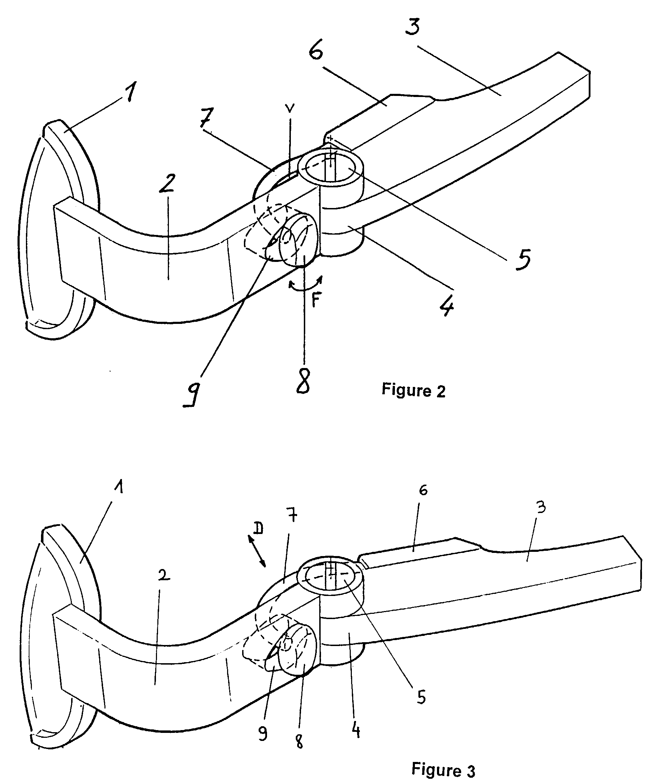

Comme on le voit sur la figure 1, la tige de rappel élastique 7 glisse ou coulisse librement à travers la lumière 9 quand la branche est dans une position totalement ou partiellement fermée pour venir juste en contact avec la zone du tenon 2 entourant la lumière 9 lorsque la branche 3 est en position d'ouverture normale, sensiblement dans l'axe du tenon 2, ainsi que cela est représenté sur la figure 2.

L'écart entre la tige de rappel et l'articulation 4, ou ventre "v", est alors de l'ordre de 1 mm. Lorsque l'utilisateur force sur la branche extérieure pour l'écarter, on se retrouve dans la position de la figure 3, où la boule arrêt 8 étant en butée contre la zone entourant la lumière 9, la tige de rappel a fléchi et s'est déformée dans son plan jusqu'en position extrême, et s'il y a lieu, contre l'articulation 4. Cette position est instable puisque la tige est déformée, lorsqu'elle est relâchée, tend naturellement à reprendre sa forme d'origine par rappel élastique de forme. C'est ce qui se produit lorsque la poussée ou la traction exercée par l'utilisateur sur la branche cesse, la branche revenant par sollicitation élastique de la tige 7 en coopération avec la boule arrêt 8 dans la position d'ouverture normale illustrée à la figure 2. Ce phénomène est symbolisé par la double flèche D sur la figure 3.

Deux types de montage sont possibles pour installer l'organe de rappel élastique 7 en place, selon que la boule arrêt peut ou non, selon sa position, passer à travers la lumière 9.

Le plus simple est de faire passer l'extrémité libre de la tige à travers la lumière, puis de venir fixer celle-ci contre la branche 3. Ce type de montage est obligatoire lorsque la boule arrêt 8, quels que soient sa forme et son positionnement, ne peut passer à travers la lumière.

Si la boule arrêt 8 a des dimensions légèrement inférieures à la lumière 9 et qu'elle est mise en regard de celle-ci, elle va pouvoir passer à travers cette lumière 9 et on va pouvoir commencer le montage de l'organe élastique de rappel 7 de cette façon. Une fois la boule arrêt 8 passée à travers la lumière 9, on va tourner l'ensemble de l'organe, c'est-à-dire la boule arrêt et la tige, d'un angle tel que la boule arrêt 8 se mette en travers et ne puisse plus repasser par la lumière.

En variante, la boule arrêt 8, fixée à la tige, n'est pas immobilisée par rapport à celle-ci et peut tourner autour de son axe. Dans ce cas, on pourra faire seulement tourner la boule arrêt 8 pour la mettre en travers de la lumière 9, et l'empêcher de repasser à travers celle-ci, jouant son rôle de butoir et point d'appui.

La flèche F sur la figure 2 symbolise dans les deux cas la rotation qui permet de mettre la boule arrêt 8 en blocage contre la lumière 9.

Cette solution présente également l'avantage, par pivotement en retour de la tige après l'avoir dégagée de la branche 3, ou de la boule arrêt autour de l'axe de la tige, de pouvoir faire repasser celle-ci à travers la lumière pour la dégager en vue par exemple d'une réparation.

On aura compris qu'à l'aide d'éléments très simples et en nombre limité, l'invention permet la réalisation d'une charnière élastique simple, élégante, et dont la seule modification par rapport à une charnière ordinaire est la nécessité de fraiser ou usiner une lumière à travers le tenon.

S'il s'agit de la solution inverse, non illustrée, où l'organe élastique est fixé au tenon et la boule arrêt vient prendre appui sur l'extérieur de la branche, c'est à travers la branche qu'il faudra fraiser une lumière.

## Revendications

1. Charnière élastique d'un type comprenant comme organe élastique de rappel (7) une lame ou une tige déformable, caractérisée en ce que l'organe élastique de rappel (7) est fixé sur l'intérieur de la branche (3), puis traverse le tenon (2) à travers une lumière (9) ménagée à cet effet dans celui-ci pour se terminer par une extrémité libre renflée (8), l'organe de rappel (7) étant libre de glisser dans la lumière (9) pour, quand la branche (3) est écartée au-delà de son ouverture normale, venir prendre appui sur l'extérieur du tenon (2) par son extrémité libre renflée (8), se déformer par élasticité de forme et, au relâchement de la branche (3), solliciter celle-ci en retour vers sa position d'ouverture normale.

2. Charnière élastique d'un type comprenant comme organe élastique de rappel une lame ou une tige déformable, caractérisée en ce que l'organe élastique de rappel est fixé sur l'intérieur du tenon, puis traverse la branche à travers une lumière ménagée à cet effet dans celle-ci pour se terminer par une extrémité libre renflée, l'organe de rappel étant libre de glisser dans la lumière pour, quand la branche est écartée au-delà de son ouverture normale, venir prendre appui sur l'extérieur de la branche par son extrémité libre renflée, se déformer par élasticité de forme et, au relâchement de la branche, solliciter celle-ci en retour vers sa position d'ouverture normale.

3. Charnière élastique selon la revendication 1 ou 2, caractérisée en ce que l'organe de rappel élastique (7) et son extrémité libre renflée (8) sont d'un seul tenant.

4. Charnière élastique selon la revendication 1 ou 2, caractérisée en ce que l'extrémité libre renflée (8) de l'organe élastique (7) est constituée d'un embout rapporté faisant arrêt-butoir.

5. Charnière élastique selon la revendication 1, 2 ou 4, caractérisée en ce que l'embout est de dimensions légèrement inférieures à celles de la lumière (9) et peut passer à travers elle, et qu'il peut tourner autour de l'axe de l'organe élastique de rappel (7) dans une position où il ne peut plus passer à travers la lumière (9).

6. Charnière élastique selon la revendication 1 ou 2, caractérisée en ce que l'organe élastique de rappel (7) est fixé sur la branche, respectivement le tenon, par soudage, sertissage, ou vissage.

7. Charnière élastique selon la revendication 1, 2 ou 6, caractérisée en ce que l'organe élastique de rappel est fixé sur la branche, respectivement le tenon, par l'intermédiaire d'une glissière, le point de fixation devenant réglable en position.

8. Charnière élastique selon la revendication 1 ou 2, caractérisée en ce que l'organe de rappel élastique a une forme arquée, courbée ou bombée ou droite puis arquée, courbée ou bombée.

9. Charnière élastique selon la revendication 8, caractérisée en ce que l'écart entre l'organe de rappel élastique (7) et l'articulation est compris entre 0,8 et 1,5 mm.
